# EUROPÄISCHE PATENTANMELDUNG

(11) **EP 0 924 836 A2**
(43) Veröffentlichungstag der Anmeldung: **23.06.1999**
(21) Anmeldenummer: 98811191.0
(22) Anmeldetag: 01.12.1998
(51) Int. Cl.: H02J 9/06

(54) **Schneller Trenner in Halbleitertechnologie**

(30) Priorität: 22.12.1997 DE 19757191
(71) Anmelder: Asea Brown Boveri AG, 5401 Baden (CH)
(72) Erfinder: Grüning, Horst, Dr., 5430 Wettingen (CH)
(74) Vertreter: Clerc, Natalia

(57) **Zusammenfassung**

Es wird ein Trenner zum Abkoppeln einer Last von einem speisenden Wechselspannungsnetz angegeben. Der Trenner umfasst mindestens eine Trennerstufe mit einer Serieschaltung mit mindestens zwei Kathode zu Kathode geschalteten, rückwärtsleitenden Abschaltthyristoren. Vorzugsweise werden die Abschaltthyristoren hart angesteuert. Dies erlaubt die Verwendung nur eines Beschaltungskondensators parallel zu der Serieschaltung der Abschaltthyristoren. Diese Ausführungsform weist den Vorteil auf, dass der Strom beim Abschalten frühzeitig von den Abschaltthyristoren kommutiert und somit die Abschaltfähigkeit erhöht werden kann.

## Beschreibung

### Technisches Gebiet

Die Erfindung bezieht sich auf das Gebiet der Leistungselektronik. Sie geht aus von einem schnellen Trenner in Halbleitertechnologie nach dem Oberbegriff des ersten Anspruchs, insbesondere geeignet für unterbrechungsfreie Stromversorgungen einer von einem Wechselspannungsnetz gespeiste Last. Ein gattungsgemässer Trenner wird beispielsweise in der französischen Patentanmeldung FR 2 666 941 A1 beschrieben.

### Stand der Technik

Gattungsgemässe Trenner oder Schalter dienen zum Abkoppeln der Last von einem speisenden Wechselspannungsnetz. Sie können insbesondere für unterbrechungsfreie Stromversorgungen eingesetzt werden. Unterbrechungsfreie Stromversorgungen weisen eine Hilfsspannungsquelle auf, die nach der Trennung der Last von dem Wechselspannungsnetz mit Hilfe von Ankopplungsmitteln an die Last angekoppelt werden kann. Die Hilfsspannungsquelle kann beispielsweise eine Batterie, deren Gleichspannung mittels eines Stromrichters in eine Wechselspannung umgewandelt wird, ein Dieselaggregat oder ein rotierendes System, bei dem die Schwungenergie eines Generators ausgenützt wird, umfassen.

Insbesondere bei sensitiven Verbrauchem wie EDV-Systemen oder elektronischen Einrichtungen in Krankenhäusern kommen in der Regel schnelle unterbrechungsfreie Stromversorgungen mit Reaktionszeiten im Bereich von Millisekunden zum Einsatz. Auf diese Weise kann sichergestellt werden, dass jede Art von transienten Störungen und kurzfristigen Spannungseinbrüchen abgefangen werden kann, so dass dem Verbraucher stets eine unterbrechungsfreie Wechselspannung zur Verfügung steht. Der Leistungsbedarf solcher Verbraucher übersteigt im Normalfall einige 10 kW nicht. Deshalb können Geräte mit Leistungstransistoren oder IGBTs als Trenner zum Einsatz kommen.

Für sensitive Verbraucher mit höherem Leistungsbedarf (z.B. 0,5 - 2 MW) werden heute Lösungen mit rotierenden Umformern bevorzugt. Die Schwungenergie eines Generators wird dabei benützt, um ms-Einbrüche abzufangen. Dauert die Störung länger, wird weitere Trägheitsmasse mittels einer dynamischen Kupplung hinzugeschaltet. Ausserdem kann ein Dieselaggregat aufgestartet und hinzugeschaltet werden, um auch minutenlange Störungen zu überbrücken. Solche rotierenden Systeme gehören seit Jahren zum Stand der Technik und haben sich grundsätzlich bewährt. Aufgrund der aufwendigen Mechanik und des teilweise erforderlichen Dauerbetriebes der Anlage benötigen sie jedoch einen hohen Wartungsaufwand und weisen markante Verluste auf. Für Leistungen über 2 MW müssen zudem mehrere System parallelgeschaltet werden.

Eine Übertragung der bekannten elektronischen Schaltungen auf Anwendungen hoher Leistungen ist bis jetzt aus wirtschaftlichen und technischen Gründen nicht möglich.

### Darstellung der Erfindung

Aufgabe der Erfindung ist es deshalb, einen schnellen Trenner in Halbleitertechnologie anzugeben, welcher für höchste Leistungen geeignet ist, zuverlässig und möglichst wartungsfrei arbeitet und eine Last innerhalb von Millisekunden von dem speisenden Wechselspannungsnetz zu trennen vermag. Diese Aufgabe wird durch die Merkmale der unabhängigen Ansprüche gelöst.

Kern der Erfindung ist es also, den Trenner oder Schalter aus mindestens einer elektronischen Trennerstufe mit einer Serieschaltung von mindestens zwei Kathode zu Kathode geschalteten, rückwärtsleitenden Abschaltthyristoren aufzubauen. Es können auch nicht rückwärtsleitende Abschaltthynstoren mit antiparallel angeordneter Diode zum Einsatz kommen. Vorzugsweise werden die Abschaltthyristoren hart angesteuert. Dadurch wird die Reaktionszeit der Abschaltthyristoren verkürzt. Dies erlaubt, die Vorteile einer Serieschaltung auszunützen und parallel zu mehreren Trennerstufen nur einen Überspannungsableiter anzuordnen. Diese Ausführungsform weist ausserdem den Vorteil auf, dass der Strom beim Abschalten frühzeitig von den Abschaltthyristoren kommutiert und somit die Abschaltfähigkeit erhöht werden kann. Der Überspannungsableiter z.B. in Form eines Varistors schützt die Trennerstufen gegen Transiente und Fehlaufteilung der Spannung in der Serieschaltung. Dieser überspannungsableiter kann zudem die Energie aus den netzseitigen Induktivitäten wirksam aufnehmen und so eine weitere Beschaltung überflüssig machen. Der Trenner kann mehrere in Serie geschaltete Trennerstufen umfassen und ist somit modular aufgebaut. Ein besonderes Augenmerk gilt der Energieversorgung der für die Abschaltthyristoren benötigten Ansteuereinheiten. Diese muss nämlich im eingeschalteten Zustand einen Dauergatestrom über eine längere Zeit liefern, ohne dass eine Anodenspannung zur Verfügung steht. Den ausgeschalteten Zustand muss sie nur während einer kurzen Zeit halten können, nämlich minimal so lange, wie ein in Serie zum elektronischen Trenner angeordneter mechanische Trenner zum Ausschalten benötigt. Nachdem der mechanische Trenner geöffnet hat, kann der elektronische Trenner wieder geschlossen werden. Das Potential der für die Abschaltthyristoren benötigten Ansteuer- und Spannungsversorgungseinheiten ist damit wieder definiert, und die Schaltung befindet sich in einem stabilen Zustand. Diese Ausschaltvorgänge kommen selten vor, so dass die benötigte Energie aus Elkos der Ansteuereinheit bezogen werden kann. Somit wird ein Ausführungsbeispiel bevorzugt, bei dem die Ansteuereinheiten über einen Transformator von dem Wechselspannungsnetz mit Energie versorgt werden.

Die Hilfswechselspannung umfasst vorzugsweise eine Gleichspannungsquelle, die mit Hilfe eines Stromrichters in eine Wechselspannung umgewandelt wird. Einen besonders vorteilhaften Aufbau erhält die erfindungsgemässe Stromversorgung dadurch, dass der Stromrichter ebenfalls mit hart angesteuerten Abschaltthynstoren ausgerüstet ist.

Weitere vorteilhafte Ausführungsformen ergeben sich aus den entsprechenden abhängigen Ansprüchen.

Die Vorteile der Erfindung sind insbesondere darin zu sehen, dass der elektronische Trenner auch für höchste Leistungen geeignet ist. Er ist genügend schnell, um kurzzeitige Spannungseinbrüche und Transiente abzufangen. Die Verwendung von hart angesteuerten Abschaltthyristoren erlaubt zudem ein Reduktion des Beschaltungsaufwandes.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Ein Blockschaltbild einer Ausführungsform der Erfindung;
- **Fig. 2**: Ein Blockschaltbild mit einer Variante für die Speisung und Ansteuerung der Abschaltthyristoren;
- **Fig. 3**: Eine weitere Variante des Ausführungsbeispiels.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

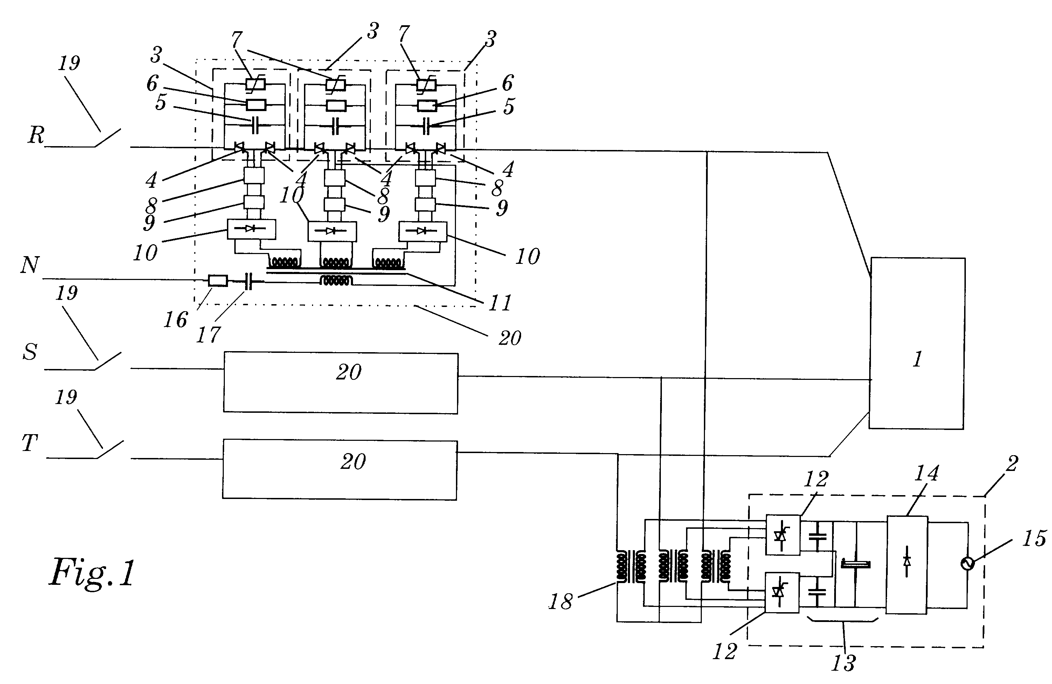

Figur 1 zeigt ein Ausführungsbeispiel der Erfindung. Mit R, S, T und N ist ein Wechselspannungsnetz bezeichnet, an das eine Last 1 angeschlossen ist. Bei der Last handelt es sich insbesondere um eine sensitive elektrotechnische Anlage höchster Leistung, die gegen Störungen und Ausfälle des Wechselspannungsnetzes geschützt werden muss. Zu diesem Zweck ist eine Hilfsspannungsquelle 2 vorgesehen, die bedarfsweise an die Last 1 angekoppelt werden kann. Zur Ankopplung kann ein dreiphasiger Transformator 18 vorgesehen sein. Die Hilfsspannungsquelle 2 umfasst beispielsweise eine Wechselspannungsquelle 15, die mit Hilfe eines Gleichrichters 14 und Zwischenkreiskondensatoren 13 in eine Gleichspannungsquelle umgewandelt wird. Die Gleichspannung wird dann mit Hilfe der Stromrichter 12 wiederum in eine Wechselspannung umgewandelt und über den Transformator 18 an die Last 1 weitergegeben.

Damit die Last 1 von dem Wechselspannungsnetz (R, S, T, N) abgekoppelt werden kann, ist ein elektronischer Schalter oder Trenner 20 vorgesehen, der in der Lage sein muss, den Stromfluss zwischen dem Netz und dem Verbraucher 1 zuverlässig und schnell zu unterbrechen. Nach der Erfindung umfasst der Trenner 20 pro Phase mindestens eine Trennerstufe 3 mit einer Serieschaltung von mindestens zwei Abschaltthyristoren 4, die Kathode zu Kathode geschaltet sind. Auf diese Weise wird eine bidirektionale Schalteinheit geschaffen, deren Gateansteuerung vom gleichen Potential gespeist werden kann. Zusätzlich kann ein mechanischer Schalter oder Trenner 19 vorgesehen sein. Im Normalfall sind die Abschaltthyristoren 4 eingeschaltet, d.h. sie leiten den Strom, und der mechanische Schalter oder Trenner 19 ist geschlossen. Der für die Abschaltthyristoren 4 benötigte Strom wird von einer Ansteuerschaltung 8 bereit gestellt, die von einer Speiseschaltung 9 mit Energie versorgt wird. Die Ansteuereinheit 8 muss also für eine relativ lange Zeit einen Dauergatestrom zur Verfügung stellen, ohne dass eine Anodenspannung zur Verfügung steht. Der ausgeschaltete Zustand der Abschaltthyristoren 4 wird hingegen nur für eine vergleichsweise kurze Zeit (bei Störungen im Netz) benötigt. Soll die Last 1 von dem Spannungsversorgungsnetz R, S, T getrennt werden, so erhalten der mechanische Trenner 19 und der elektronische Trenner 20 gleichzeitig Befehle zum Öffnen. Der elektronische Trenner 20 wird selbstverständlich schneller öffnen.

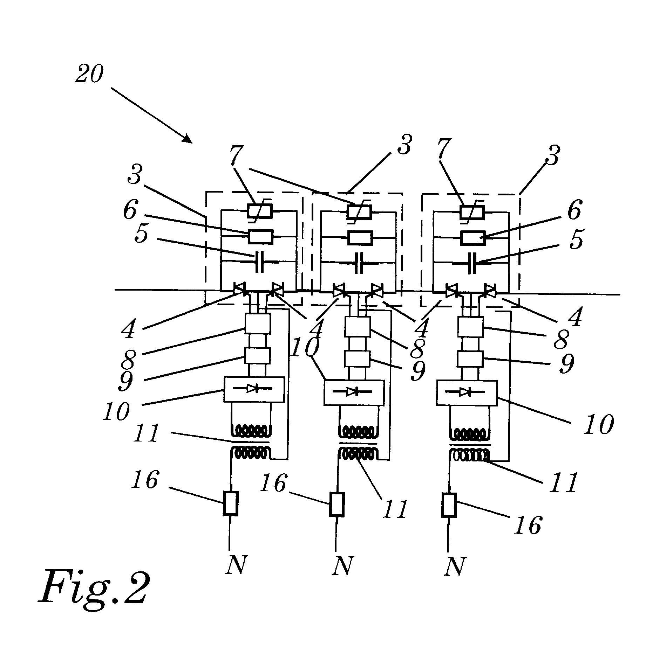

Nachdem auch der mechanische Trenner 19 offen ist, kann der elektronische Trenner 20 wieder geschlossen werden. Dadurch werden die Speiseschaltung 9 und die Ansteuereinheit 8 wieder mit Spannung versorgt, denn die Primärwicklung des Transformators 11 wird dann von der Hilfsspannungsquelle 2 gespeist. Die Schaltung befindet sich somit wieder in einem definierten Zustand. Schaltvorgänge dieser Art kommen also nur selten vor. Demnach reicht es aus, wenn die benötigte Schaltenergie aus dazu vorgesehenen Elektrolytkondensatoren der Ansteuereinheiten 8 bezogen wird. Die Speisung der Ansteuereinheiten 8 umfasst somit neben der Speiseschaltung 9 vorzugsweise Transformatoren 11 und Gleichrichter 10, die je nachdem ob die Trenner offen sind von der Netzspannung oder von der Hilfsspannungsquelle 2 gespeist werden. Der Transformator 11 ist zwischen die Phase R, S oder T und den Nulleiter N geschaltet. Für mehrere in Serie geschaltete Trennerstufen 3 können die Transformatoren 11 derart zusammengefasst werden, dass mehrere Sekundärwicklungen von einer Primärwicklung gespeist werden (Figur 1). Es kann jedoch pro Trennerstufe 3 auch ein separater Transformator 11 vorgesehen sein (Figur 2). Bei der ersten Variante werden, um den Transformator 11 klein zu halten, vorzugsweise nicht mehr als drei Trennerstufen 3 einer Primärwicklung zugeordnet. Am besten wird in diesem Fall die mittlere Sekundärwicklung mit dem Phasenleiter R, S oder T verbunden. Dadurch werden die Spannungsunterschiede zu den benachbarten Trennerstufen 3 gering gehalten, und die Anforderungen an die Isolation des Transformators 11 können in einem vernünftigen Rahmen gehalten werden. Selbstverständlich können auch mehr als drei in Serie geschaltete Trennerstufen 3 vorgesehen sein. In diesem Fall ist es von Vorteil, immer je drei Sekundärwicklungen auf eine Primärwicklung zusammenzufassen. Zu Schutzzwecken kann ausserdem ein Schutzwiderstand 16 und ein Kondensator 17 zwischen dem Nulleiter und dem Transformator vorgesehen sein, die die Netzspannung vorteilen. Dies ist auch im Hinblick auf die geforderte Isolation des Transformators 11 von Vorteil.

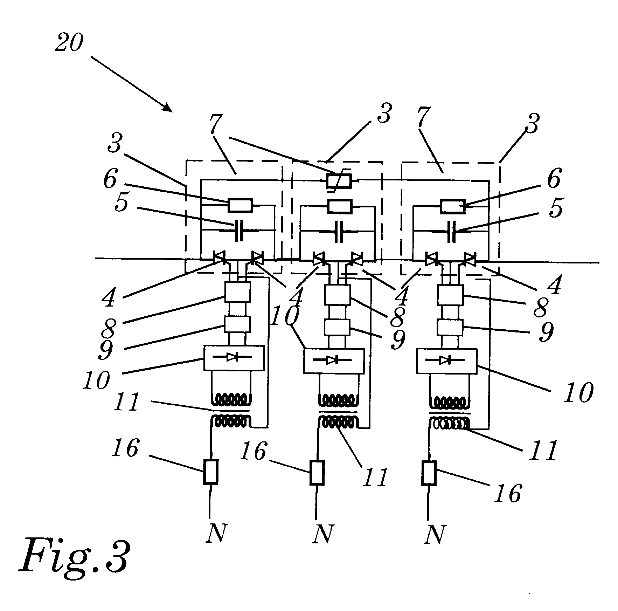

Die Abschaltthyristoren 4 einer Trennerstufe 3 werden vorzugsweise hart angesteuert. Die Reaktionszeit der Abschaltthyristoren 4 wird dadurch verkleinert. Die harte Ansteuerung erlaubt ausserdem, dass die Vorteile einer Serieschaltung von Trennerstufen 3 ausgenützt werden können: Es kann in diesem Fall nur ein Überspannungsableiter 7 für die Serieschaltung von Trennerstufen 3 vorgesehen werden (siehe Figur 3). Fakultativ kann noch ein paralleler Widerstand 6 vorgesehen sein. Ausserdem kann ein paralleler Überspannungsableiter 7, z.B. in der Form eines Varistors vorgesehen sein, der die Abschaltthyristoren 4 gegen Transiente und Fehlaufteilung der Spannung in der Serieschaltung der Trennerstufe 3 schützt. Anstatt pro Trennerstufe 3 einen einzelnen Überspannungsableiter 7 vorzusehen, kann auch ein gemeinsamer, parallel zur gesamten Serieschaltung angeordneter Überspannungsableiter vorgesehen werden.

Vorstehend wurde der Trenner nur einer Phase besprochen. Es ist jedoch eine Selbstverständlichkeit, dass der Trenner 20 genauso bei jeder Phase vorgesehen sind. Dies wird in der Figur 1 schematisch durch die mit 20 beschriftete Box angedeutet. Die Anzahl der in Serie geschalteten Trennerstufen 3 eines Trenners 20 richtet sich im wesentlichen nach der geforderten Spannungsfestigkeit.

Die Stromrichter 12 werden vorzugsweise ebenfalls mit hart angesteuerten Abschaltthyristoren ausgerüstet. In diesem Fall können auch die umfangreichen Beschaltungen des Stromrichters 12 zu einem grossen Grad wegfallen.

### Bezugszeichenliste

R, S, T, N Wechselspannungsnetz
- 1: Last
- 2: Hilfsspannungsquelle
- 3: elektronische Trennerstufe
- 4: Abschaltthyristor
- 5: Kondensator
- 6: Widerstand
- 7: Überspannungsableiter
- 8: Ansteuereinheit
- 9: Speiseschaltung
- 10: Gleichrichter
- 11: Transformator
- 12: Stromrichter
- 13: Zwischenkreiskondensatoren
- 14: Gleichrichter
- 15: Wechselspannungsquelle
- 16: Schutzwiderstand
- 17: Kondensator
- 18: Koppeltransformator
- 19: mechanischer Trenner
- 20: elektronischer Trenner

## Patentansprüche

1. Schneller Trenner in Halbleitertechnologie, zum Trennen einer Last von einem speisenden Wechselspannungsnetz (R, S, T), dadurch gekennzeichnet, dass der Trenner (20) mindestens eine Trennerstufe (3) mit einer Serieschaltung von mindestens zwei, Kathode zu Kathode geschalteten, entweder rückwärtsleitenden oder nicht rückwärtsleitenden dafür mit Antiparalleldiode ausgerüsteten Abschaltthyristoren (4) umfasst.

2. Trenner nach Anspruch 1, dadurch gekennzeichnet, dass parallel zu der Serieschaltung von Abschaltthyristoren (4) jeweils ein Kondensator (5) geschaltet ist.

3. Trenner nach Anspruch 2, dadurch gekennzeichnet, dass parallel zu der Serieschaltung von Abschaltthyristoren (4) jeweils ein Überspannungsableiter (7) geschaltet ist.

4. Trenner nach Anspruch 2, dadurch gekennzeichnet, dass mindestens zwei hintereinander geschaltete Serieschaltungen von zwei Abschaltthyristoren (4) vorgesehen sind und dass ein gemeinsamer Überspannungsableiter (7) parallel zu der Hintereinanderschaltung der Serieschaltungen von Abschaltthyristoren (4) vorgesehen ist.

5. Trenner nach einem der Ansprüche 1 bis 4, dadurch gekennzeichnet, dass die Abschaltthyristoren (4) der Trennerstufen (3) hart angesteuert werden.

6. Trenner nach einem der vorstehenden Ansprüche, dadurch gekennzeichnet, dass die Abschaltthyristoren (4) der Trennerstufen (3) von einer Ansteuereinheit (8) angesteuert werden, die ihre Speisespannug über einen Speisetransformator (11) von dem Wechselspannungsnetz bezieht.

7. Unterbrechungsfreie Stromversorgung für eine von einem Wechselspannungsnetz gespeiste Last (1), umfassend einen Trenner (20) zum Abkoppeln der Last (1) von dem Wechselspannungsnetz, eine Hilfswechselspannungsquelle (2) sowie Mittel (11) zum Ankoppeln der Hilfswechselspannung an die Last, dadurch gekennzeichnet, dass der Trenner (20) mindestens eine Trennerstufe (3) mit einer Serieschaltung von mindestens zwei, Kathode zu Kathode geschalteten, entweder rückwärts leitenden oder nicht rückwärtsleitenden dafür mit Antiparalleldiode ausgerüsteten Abschaltthyristoren (4) umfasst.

8. Unterbrechungsfreie Stromversorgung nach Anspruch 7, dadurch gekennzeichnet, dass die Hilfswechselspannungsquelle (2) mit Hilfe eines Transformators (18) an die Last (1) angekoppelt wird und dass die Hilfswechselspannungsquelle (2) eine Gleichspannungsquelle (13) umfasst, die mittels eines Stromrichters (12) in eine Wechselspannung umgewandelt wird, wobei der Stromrichter (12) Abschaltthyristoren aufweist, die hart angesteuert werden.

9. Unterbrechungsfreie Stromversorgung nach Anspruch 8, dadurch gekennzeichnet, dass der Trenner (20) nach einem der Ansprüche 2 bis 6 aufgebaut ist.
